Europäisches Patentamt

**European Patent Office**

**Office européen des brevets**

(19)

(11) Numéro de publication: **0 030 180**
**B1**

(12) **FASCICULE DE BREVET EUROPEEN**

(45) Date de publication du fascicule du brevet:
**24.10.84**

(21) Numéro de dépôt: **80401642.6**

(22) Date de dépôt: **17.11.80**

(51) Int. Cl.³: **F 16 L 23/04**

(54) **Dispositif de raccordement de canalisations.**

(30) Priorité: **03.12.79 FR 7929657**

(43) Date de publication de la demande:
**10.06.81 Bulletin 81/23**

(45) Mention de la délivrance du brevet:
**24.10.84 Bulletin 84/43**

(84) Etats contractants désignés:
**BE CH DE GB IT LI NL SE**

(56) Documents cités:
**CH - A - 458 854**
**FR - A - 1 372 390**
**GB - A - 430 676**
**GB - A - 840 715**
**US - A - 1 607 943**
**US - A - 2 341 164**
**US - A - 3 231 298**

(73) Titulaire: **COMMISSARIAT A L'ENERGIE ATOMIQUE**
**Etablissement de Caractère Scientifique Technique et**
**Industriel, B.P. 510, F-75752 Paris Cedex 15 (FR)**

(72) Inventeur: **Abbes, Claude, Les Primevères 5 Montée du**
**Crêt du Loup, F-42100 Saint-Etienne (FR)**
Inventeur: **Rouaud, Christian, Les Genêts,**
**F-07700 Bourg Saint Andeol (FR)**
Inventeur: **Forges, Robert, Les Charagons,**
**F-84500 Bollene (FR)**
Inventeur: **De Villepoix, Raymond, "La Chatelière",**
**F-26290 Donzere (FR)**

(74) Mandataire: **Mongrédien, André et al, c/o**
**BREVATOME 25, rue de Ponthieu, F-75008 Paris (FR)**

ACTORUM AG

## Description

La présente invention concerne un dispositif destiné à raccorder de façon étanche deux canalisations, ce dispositif comprenant des moyens de serrage qui prennent appui sur deux brides fixées, par exemple par soudure, aux canalisations.

On connaît de nombreux dispositifs de raccordement de ce type. Parmi ces dispositifs connus, on trouve notamment des assemblages à brides boulonnées et des raccordements à embouts soudés.

Dans les assemblages à brides boulonnées, le joint d'étanchéité est, soit logé dans une gorge formée sur la face avant de l'une des brides, soit serré directement entre les faces avant des brides. Dans les deux cas, le serrage est réalisé au moyen de boulons ou de tout autre moyen de serrage analogue. Lorsque le joint d'étanchéité est logé dans une gorge, son montage et son démontage nécessitent l'écartement des deux brides sur une distance sensiblement égale à l'épaisseur du joint. Lorsque le joint est placé directement entre les deux brides, l'écartement entre les brides doit être légèrement supérieur à l'épaisseur du joint afin de permettre son montage.

Dans les raccordements à embouts coniques soudés, le montage du joint est réalisé en écartant les deux embouts d'une distance égale à la largeur du dispositif d'autocentrage du joint et des embouts.

De plus, dans tous ces dispositifs de raccordement connus, le serrage du joint est réalisé en rapprochant les deux brides ou les deux embouts par exemple au moyen des boulons de serrage.

On connaît aussi du brevet US-A-1 607 943 un dispositif de raccordement de canalisations dans lequel deux demi-colliers agissent à la manière d'un coin dans une gorge formée sur un joint d'étanchéité, afin de solliciter celui-ci radialement contre les extrémités cylindriques des canalisations et axialement contre des brides formées sur celles-ci à une certaine distance de leurs extrémités. Dans ce document, les demi-colliers comprennent en outre des parties prenant appui sur les faces arrière des brides. Toutefois, il est nécessaire, ici encore, de déplacer les canalisations lorsqu'on souhaite mettre en place ou retirer le joint.

Dans tous ces dispositifs de la technique antérieure, les brides fixées aux extrémités des canalisations doivent donc subir différents mouvements, aussi bien lors de l'introduction ou du démontage des joints que lors du serrage du raccord. Ces mouvements engendrent des contraintes dans les canalisations ou dans les carters des appareillages insérés dans le circuit. Ces contraintes peuvent être absorbées en utilisant des canalisations relativement souples présentant des coudes ou des formes en lyre permettant de compenser les mouvements des brides. Cependant, l'emploi de telles canalisations n'est pas toujours possible, et les dispositifs de raccordement classiques ne peuvent donc pas toujours être utilisés. En outre, même lorsqu'il est possible de donner aux canalisations une structure et une configuration permettant de compenser les mouvements imposés aux brides, ces caractéristiques particulières des canalisations compliquent le circuit et en augmentent sensiblement le coût.

Enfin, on connaît du brevet GB-A-430 676 un dispositif de raccordement de canalisations dans lequel deux demi-coquilles pressent radialement deux anneaux d'étanchéité contre des brides fixées aux extrémités des canalisations et contre un élément tubulaire disposé entre les brides. Bien que ce dispositif permette d'assurer le raccordement sans déplacer les brides, il présente l'inconvénient d'être d'une étanchéité approximative en raison du serrage radial des anneaux d'étanchéité entre deux surfaces cylindriques. Cela est accru par la difficulté de mise en place de ces anneaux.

La présente invention a pour objet un dispositif de raccordement de canalisations constituant un perfectionnement du dispositif décrit dans le brevet GB-A-430 676, ne présentant pas les inconvénients des dispositifs de la technique antérieure et pouvant notamment être utilisé dans tout circuit sans nécessiter aucune modification des canalisations. En particulier, le dispositif de raccordement selon l'invention assure une bonne étanchéité tout en ne nécessitant aucun déplacement mesurable des brides, même lors de l'introduction des joints d'étanchéité ou lors du serrage du raccord.

A cet effet, il est proposé conformément à la présente invention un dispositif de raccordement de canalisations comprenant deux brides fixées aux extrémités des canalisations et dont les faces avant sont séparées par une distance donnée, et des moyens de raccordement comportant au moins un organe mobile selon une direction radiale et un élément tubulaire placé entre les faces avant des brides et dont le diamètre interne est sensiblement égal au diamètre interne des brides, ledit organe mobile présentant des parties terminales prenant appui sur la face arrière des brides, caractérisé en ce que les moyens de raccordement comprennent de plus un dispositif de longueur axiale variable monté sur ledit élément tubulaire entre les faces avant des brides, et des moyens transformant un déplacement radial vers l'intérieur dudit organe mobile en un allongement du dispositif de longueur axiale variable, afin d'amener ce dernier en appui étanche contre les faces avant des brides, lesdites parties terminales servant à empêcher l'écartement des brides lors de l'allongement du dispositif de longueur axiale variable.

Grâce aux caractéristiques de l'invention qui viennent d'être exposées, le serrage du dispositif de raccordement ne s'effectue pas en rapprochant les brides comme dans la plupart des dispositifs de la technique antérieure. Au contraire, le serrage du dispositif selon l'invention est effectué en allongeant entre les brides un dispositif extensible tout en maintenant simultanément les brides à une distance constante. De plus, les joints assurant l'étanchéité entre les brides peuvent être mis en place ou démontés sans modifier la distance séparant les brides. De même, le dispositif peut être serré sans qu'aucun déplacement notable des brides ne se produise. Enfin, l'étanchéité est obtenue par un déplacement axial de deux surfaces planes, ce qui assure son efficacité.

Conformément à un autre aspect de l'invention, le dispositif extensible comprend deux éléments mobiles montés coulissant sur l'élément tubulaire pour solliciter deux joints toriques en contact étanche avec les brides lors de l'allongement du dispositif extensible. De préférence, les joints toriques sont disposés dans un espace annulaire défini entre la surface externe de l'élément tubulaire, une surface biseautée formée sur l'élément mobile et la face avant de la bride.

Selon encore un autre aspect de l'invention, chacune des brides présente au moins une partie en saillie définissant un berceau dans lequel sont reçus les deux éléments mobiles et l'élément tubulaire. Cette disposition est particulièrement avantageuse lorsque les canalisations sont disposées dans un endroit peu accessible nécessitant par exemple l'utilisation d'un manipulateur.

Conformément à un autre aspect de l'invention, chacun des éléments mobiles comporte une portée conique, et l'organe mobile comprend une partie intermédiaire comportant deux surfaces coniques opposées qui viennent en appui contre les portées coniques pour solliciter les deux éléments mobiles en éloignement l'un de l'autre lorsque l'organe mobile est déplacé radialement vers l'intérieur sous l'action d'un dispositif de serrage.

Selon un premier mode de réalisation de l'invention, l'organe mobile comprend deux demi-coquilles présentant chacune en section ladite partie intermédiaire et lesdites parties terminales. Le serrage et le maintien en position du dispositif peuvent alors être effectués, soit au moyen de boulons disposés entre les demi-coquilles, soit au moyen d'un outil externe, tel qu'une pince ou un vérin, les demi-coquilles étant alors maintenues en position rapprochée par des moyens de verrouillage appropriés.

Selon un second mode de réalisation de l'invention, l'organe mobile comprend plusieurs maillons articulés définissant une chaîne ouverte, chacun des maillons présentant en section ladite partie intermédiaire et lesdites parties terminales, le serrage du collier étant effectué au moyen d'un dispositif de mise en tension disposé entre les extrémités de la chaîne.

On décrira maintenant, à titre d'exemple non limitatif, différents modes de réalisation de l'invention en se référant aux dessins annexés dans lesquels:
- la figure 1 est une vue en coupe longitudinale d'un dispositif de raccordement de canalisations réalisé conformément aux enseignements de la présente invention,
- la figure 2 est une vue en bout d'une variante d'un premier mode de réalisation du dispositif de raccordement représenté en coupe sur la figure 1,

- la figure 3 est une vue en bout d'une autre variante du mode de réalisation représenté sur la figure 2, et
- la figure 4 est une vue en perspective d'un collier à chaîne pouvant être utilisé dans le dispositif de raccordement de la figure 1 conformément à un second mode de réalisation de l'invention.

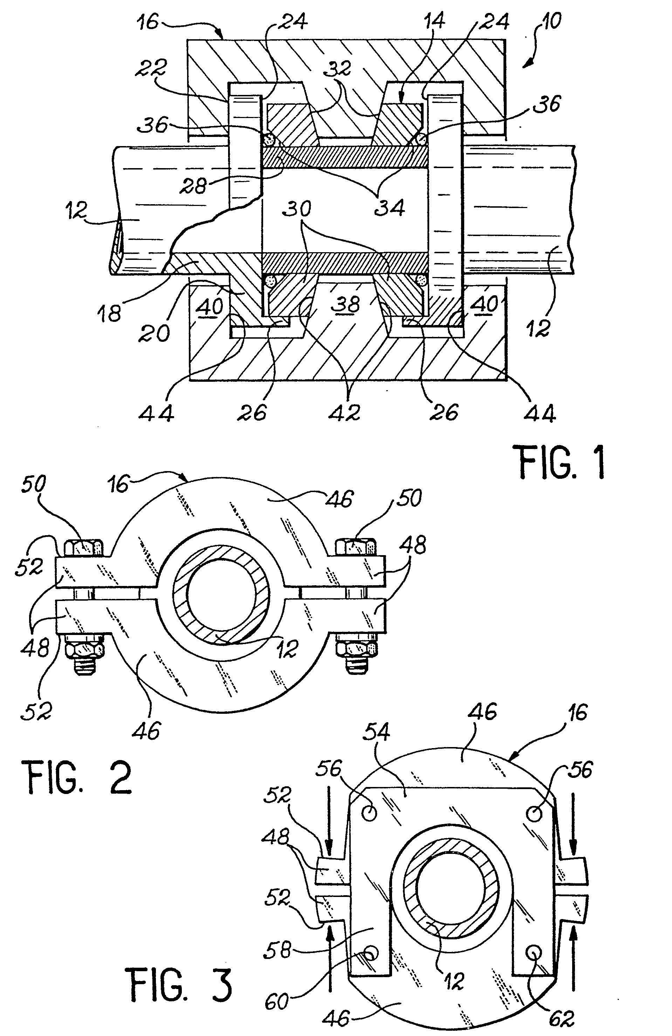

Le dispositif de raccordement 10 représenté en coupe longitudinale sur la figure 1 comprend deux brides 12 prévues pour être fixées de façon étanche aux extrémités en vis-à-vis de deux canalisations à raccorder (non représentées) et des moyens de serrage constitués par un organe extensible 14 et par un organe mobile 16 commandant l'allongement de l'organe extensible 14.

Chacune des brides 12 est fixée de préférence par soudure à la canalisation correspondante. Chaque bride comprend une partie tubulaire 18 et une partie radiale 20, cette dernière partie définissant une face arrière 22 et une face avant 24. Comme l'illustre la figure 1, les faces avant 24 des brides sont séparées par une distance suffisante pour permettre l'insertion de l'organe extensible 14. Chacune des parties radiales 20 comprend en outre sur sa face 24 une ou plusieurs parties en saillie 26 définissant un berceau dans lequel est reçu l'organe extensible 14. Cette disposition facilite le positionnement de l'organe 14 et permet le cas échéant, une manipulation en aveugle de cet organe.

Conformément à l'invention, l'organe extensible 14 comprend un élément tubulaire 28 dont la longueur est sensiblement égale ou légèrement inférieure à la distance séparant les faces avant 24 des brides et dont le diamètre interne est sensiblement égal au diamètre interne des brides 12 et des canalisations correspondantes. Deux éléments mobiles identiques 30 sont montés de façon coulissante sur chacune des extrémités de l'élément tubulaire 28. Les éléments 30 se présentent sous la forme de bagues dont les faces en vis-à-vis sont inclinées pour définir des portées troncoconique identiques 32. La face opposée de chacun des éléments 30 présente à sa périphérie interne une surface biseautée 34. La surface 34 définit avec la surface externe de l'élément tubulaire 28 et avec la face avant 24 de la bride correspondante. un espace annulaire de section triangulaire dans lequel est reçu un joint d'étanchéité torique 36.

Comme on le verra plus en détail sur les figures 2 à 4, l'organe mobile 16 peut présenter différentes formes de réalisation selon le nombre des parties qui le composent et selon la nature du dispositif assurant le serrage et le verrouillage de ces parties. Cependant, quelle que soit la forme de réalisation de l'organe 16, chacune des parties qui le composent, ou au moins certaines de ces parties présentent en coupe longitudinale selon l'axe du raccord, une forme bien déterminée.

Ainsi, comme l'illustre la figure 1, l'organe mobile 16 comprend une partie intermédiaire 38 et deux parties terminales 40 qui font saillie radialement vers l'intérieur. La partie intermédiaire 38 définit deux surfaces tronconiques opposées 42 qui viennent en appui sur les portées tronconiques 32 formées sur les éléments 30. Par ailleurs, chacune des parties terminales 40 définit en vis-à-vis de la surface tronconique 42 de la partie intermédiaire 38 une surface plane 44 perpendiculaire à l'axe des brides 12. L'écartement entre les surfaces planes 44 est sensiblement égal à la distance séparant les faces arrière 22 des brides 12, de telle sorte que ces dernières sont en appui contre les parties terminales 40 lorsque les différentes parties de l'organe mobile 16 sont déplacées radialement vers l'intérieur. Comme on le verra par la suite, ce déplacement radial a pour conséquence de serrer le raccord en sollicitant par un effet de coin les éléments 30 vers les brides 12 en raison de l'appui des surfaces tronconiques 42 contre les portées tronconiques 32. L'écartement des éléments 30 a pour effet de comprimer les joints toriques 36 entre les surfaces biseautées 34, la surface externe de l'élément tubulaire 28 et les faces avant 24 des brides. L'étanchéité du dispositif de raccordement selon l'invention est ainsi assurée.

Conformément à la présente invention, en raison de la venue en appui des faces arrière 22 des brides 12 contre les surfaces planes 44 des parties terminales 40, l'écartement des éléments 30 lors du serrage du dispositif n'entraîne aucun déplacement mesurable des brides 12.

Dans un premier mode de réalisation de l'invention dont deux variantes sont représentées sur les figures 2 et 3, l'organe mobile 16 comprend deux demi-coquilles 46 munies chacune de deux oreilles 48 permettant le rapprochement des demi-coquilles au moyen d'un dispositif de serrage approprié.

Dans la variante représentée sur la figure 2, le dispositif de serrage est constitué par deux boulons 50, ou par tout moyen analogue, prenant appui sur des surfaces opposées 52 des oreilles 48 pour permettre le serrage du dispositif en rapprochant les demi-coquilles 46. Le rapprochement des demi-coquilles conduit à un déplacement radial vers l'intérieur des parties intermédiaires 38, qui entraîne l'écartement des éléments 30 et la compression des joints 36 contre les faces 24 des brides.

Les boulons 50 remplissent de plus une fonction de verrouillage puisqu'ils assurent le maintien du dispositif en position lorsque le serrage est effectué.

Dans la variante représentée sur la figure 3, le serrage est réalisé au moyen d'un outil de serrage approprié, tel qu'une pince ou un vérin, susceptible de venir prendre appui sur les surfaces opposées 52 formées sur les oreilles 48. Le serrage exercé par cet outil est représenté schématiquement par des flèches sur la figure 3. Dans cette variante, le dispositif de serrage étant externe au dispositif de raccordement, il est nécessaire de prévoir sur ce dernier des moyens de verrouillage permettant de maintenir le raccord en position serrée. De tels moyens de verrouillage peuvent être constitués notamment par une tôle semi-rigide 54 fixée à chacune des extrémités de l'une des demi-coquilles 46 par exemple au moyen de vis représentées schématiquement en 56. Chaque tôle 54 présente des bras 58 qui s'étendent de part et d'autre de la bride 12 correspondante pour venir engager la face terminale de l'autre demi-coquille 46. Chacun des bras 58 présente une ouverture circulaire 60 dans laquelle vient s'engager un plot 62 qui fait saillie sur la face terminale de l'autre demi-coquille 46 lorsque le dispositif de raccordement est serré. Afin de faciliter le montage, les extrémités libres des bras 58 sont de préférence incurvées en éloignement des faces terminales des demi-coquilles, ce qui facilite la flexion de la tôle 54 lorsque les bras 58 arrivent au niveau des plots 62 au cours du serrage.

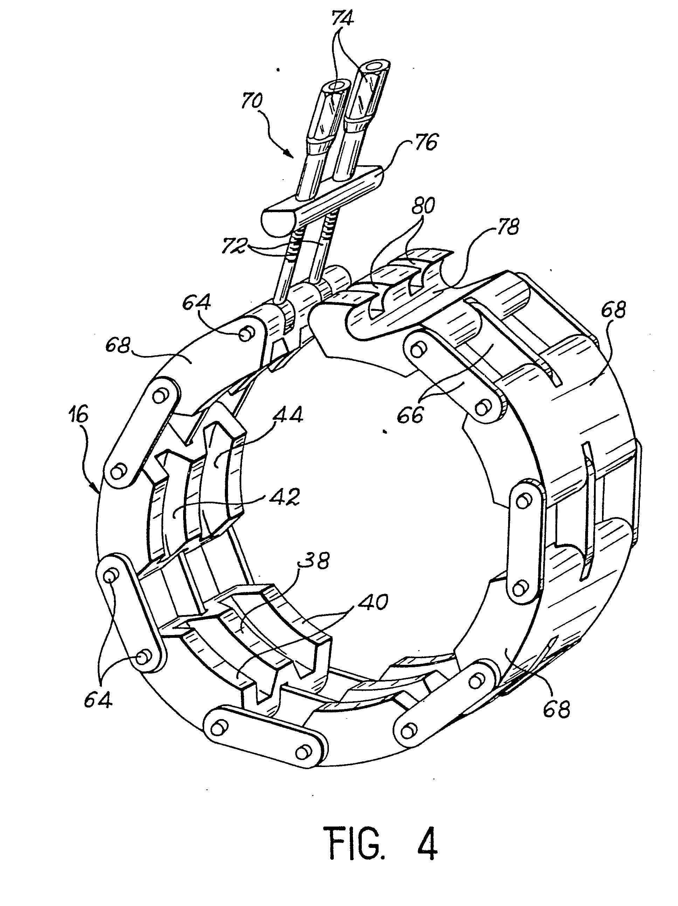

Dans le second mode de réalisation représenté sur la figure 4, l'organe mobile 16 est constitué par un collier ouvert comprenant une série de maillons 68 articulés entre eux au moyen d'axes 64 sur lesquels sont reçues des biellettes 66. Ainsi, chacun des maillons 68 est relié aux maillons voisins par trois biellettes 66 dont deux sont disposées de part et d'autre des maillons alors que la troisième est disposée approximativement dans le plan médian défini par les maillons. L'un des maillons 68 définissant l'une des extrémités de la chaîne porte un dispositif de serrage 70 constitué par deux tiges filetées 72 articulées sur l'un des axes 64 de ce maillon, deux écrous 74 reçus sur les tiges filetées 72 et une barre d'appui arrondie 76 déplacée par les écrous 74 le long des tiges filetées 72. Le maillon 68 définissant l'autre extrémité de la chaîne comprend à sa surface externe une partie en forme de crochet 78 et deux encoches 80 ménagées dans l'extrémité du crochet 78.

Comme l'illustre la figure 4, lorsque le dispositif de serrage 70 pivote autour de l'axe 64, la barre 76 vient s'engager dans le crochet 78 et les tiges filetées 72 passent alors par les encoches 80. On conçoit que le serrage du collier est alors réalisé facilement en déplaçant au moyen des écrous 74 la barre d'appui 76 le long des tiges filetées 72 de manière à rapprocher les extrémités du collier. Comme dans la variante de réalisation de la figure 2, le dispositif de serrage 70 est porté par l'organe mobile 76, de telle sorte qu'il assure à la fois le serrage du dispositif de raccordement et le verrouillage de ce dispositif en position serrée.

Bien entendu, l'invention n'est pas limitée aux modes de réalisation qui viennent d'être décrits à titre d'exemple, mais en couvre toutes les variantes. Ainsi, il ressort clairement des différents exemples décrits que le nombre des éléments constituant l'organe mobile 16 est sans influence sur l'invention, pourvu que la totalité de ces éléments ou qu'au moins une partie d'entre eux, répartis de préférence de façon uniforme présentent à la fois une partie telle que la partie intermédiaire 38 permettant de commander l'allongement de l'organe extensible 14 et des parties telles que les parties terminales 40 permettant de maintenir en position les brides 12 lors de l'allongement de cet organe. D'autre part, la structure de l'organe extensible 14 et les moyens permettant de commander son allongement peuvent être modifiés sans sortir du cadre de l'invention.

**Revendications**

1. Dispositif de raccordement de canalisations comprenant deux brides (12) fixées aux extrémités des canalisations et dont les faces avant (24) sont séparées par une distance donnée, et des moyens de raccordement comportant au moins un organe (16) mobile selon une direction radiale et un élément tubulaire (28) placé entre les faces avant des brides et dont le diamètre interne est sensiblement égal au diamètre interne des brides, ledit organe mobile (16) présentant des parties terminales (40) prenant appui sur la face arrière des brides, caractérisé en ce que les moyens de raccordement comprennent de plus un dispositif de longueur axiale variable (30) monté sur ledit élément tubulaire (28) entre les faces avant des brides et, des moyens (32, 42) transformant un déplacement radial vers l'intérieur dudit organe mobile (16) en un allongement du dispositif de longueur axiale variable, afin d'amener à ce dernier en appui étanche contre les faces avant des brides, lesdites parties terminales (40) servant à empêcher l'écartement des brides lors de l'allongement du dispositif de longueur axiale variable.

2. Dispositif selon la revendication 1, caractérisé en ce que le dispositif de longueur axiale variable comprend deux éléments mobiles (30) montés coulissants sur ledit élément tubulaire (28), pour solliciter deux joints toriques (36) en contact étanche avec les brides (12) lors de l'allongement du dispositif de longueur axiale variable.

3. Dispositif selon la revendication 2, caractérisé en ce que chaque joint torique (36) est disposé dans un espace annulaire défini entre la surface externe de l'élément tubulaire (28), une surface biseautée (34) formée sur l'élément mobile (30) et la face avant de la bride (12).

4. Dispositif selon l'une quelconque des revendications 2 et 3, caractérisé en ce que chacune des brides (12) présente au moins une partie en saillie (26) définissant un berceau dans lequel sont reçus les deux éléments mobiles (30) et l'élément tubulaire (28).

5. Dispositif selon l'une quelconque des revendications 2 à 4, caractérisé en ce que chacun des éléments mobiles (30) comprend une portée conique (32) et en ce que l'organe mobile (16) comprend une partie intermédiaire (38) comportant deux surfaces coniques (42) opposées qui viennent en appui contre les portées coniques (32) pour solliciter les deux éléments mobiles (30) en éloignement l'un de l'autre lorsque l'organe mobile est déplacé radialement vers l'intérieur sous l'action d'un dispositif de serrage (50, 70).

6. Dispositif selon la revendication 5, caractérisé en ce que l'organe mobile (16) comprend deux demi-coquilles (46) présentant chacune en section ladite partie intermédiaire (38) et lesdites parties terminales (40).

7. Dispositif selon la revendication 6, caractérisé en ce que le dispositif de serrage comprend des boulons (50) ou analogues, disposés entre les demi-coquilles (46) pour permettre leur rapprochement et pour les maintenir en position.

8. Dispositif selon la revendication 6, caractérisé en ce que le dispositif de serrage est un outil externe tel qu'une pince ou un vérin, des moyens de verrouillage (60, 62) étant prévus entre les demi-coquilles (46) pour les maintenir en position rapprochée après la mise en œuvre du dispositif de serrage.

9. Dispositif selon la revendication 5, caractérisé en ce que l'organe mobile (16) comprend plusieurs maillons articulés (68) définissant une chaîne ouverte, chacun des maillons présentant en section ladite partie intermédiaire (38) et lesdites parties terminales (40), le dispositif de serrage étant constitué par un dispositif de mise en tension (70) disposé entre les extrémités de la chaîne.

**Claims**

1. Device for joining pipes comprising two flanges (12) fixed to the ends of the pipes, whose front faces (24) are separated by a predetermined distance, and joining means comprising at least one radially-movable member (16) and a tubular member (28), located between the front faces of the flanges and whose internal diameter is substantially equal to the internal diameter of the flanges, said movable member (16) having end pieces (40) that bear on the rear face of the flanges, characterized in that the joining means additionally comprise a device (20) of variable axial length mounted on said tubular member (28) between the front faces of the flanges, means (32, 42) for converting radially-inwards motion of said movable member (16) into an elongation of the device of variable axial length, whereby to bring the latter into fluid-tight contact with the front faces of the flanges, said end pieces (40) acting to prevent movement apart of the flanges during elongation of the device of variable axial length.

2. Device according to Claim 1, characterized in that the device of variable axial length comprises two movable members (30) slidably mounted on said tubular member (28), for urging two O-rings (38) into fluid-tight contact with the flanges (12) during elongation of the device of variable axial length.

3. Device according to Claim 2, characterized in that each O-ring is located in an annular space defined between the external surface of the tubular member (28), a bevelled surface formed on the movable member (30), and the front face of the flange (12).

4. Device according to either of Claims 2 and 3, characterized in that each of the flanges (12) has at least one projecting portion (26) defining a cradle into which fit the two movable members (30) and the tubular member (28).

5. Device according to any one of Claims 2 to 4, characterized in that each of the movable members (30) has a conical bearing surface (32) and in that the movable member (16) comprises an intermediate portion (38) having two opposed conical surfaces (43) which bear against the conical bearing surfaces (32) to urge the two movable members (30) away from each other as the movable member is displaced radially inwards under the action of a tightening device (50, 70).

6. Device according to Claim 5, characterized in that the movable member (16) comprises two half-shells (46) each providing in section said intermediate portion (38) and said end pieces (40).

7. Device according to Claim 6, characterized in that the tightening device comprises bolts (50) or the like, disposed between the half-shells (46) to enable the latter to be brought together and held in position.

8. Device according to Claim 6, characterized in that the tightening device is an externally-acting device, such as a clamp or a jack, locking means (60, 62) being provided between the half-shells (46) to keep them in close connection after operation of the tightening device.

9. Device according to Claim 5, characterized in that the movable member (16) comprises a plurality of articulated links (68) forming an open chain, each of said links having in section said intermediate portion (38) and said end pieces (40), the tightening device being constituted by a tensioning means (70) disposed between the ends of the chain.

**Patentansprüche**

1. Röhrenverbindungsvorrichtung mit zwei fest an den Enden der Röhren angebrachten Flanschen (12), deren Vorderflächen durch einen gegebenen Abstand voneinander getrennt sind, und einer Verbindungseinrichtung mit wenigstens einem in Radialrichtung beweglichen Element (16) und einem zwischen den Vorderflächen (24) der Flansche angeordneten rohrförmigen Element (28), dessen Innendurchmesser im wesentlichen gleich dem Innendurchmesser der Flansche ist, wobei das bewegliche Element (16) an den Rückseiten der Flansche angreifende Endstücke (40) aufweist, dadurch gekennzeichnet, dass die Verbindungseinrichtung ferner ein eine variable axiale Länge aufweisendes Teil (30) aufweist, welches zwischen den Vorderflächen der Flansche auf dem rohrförmigen Element (18) angebracht ist, sowie eine radiale Einwärtsbewegung des beweglichen Elements (16) in eine Streckung des eine variable axiale Länge aufweisenden Teils umwandelnde Einrichtungen (32, 42) umfasst, mittels deren das eine variable Länge aufweisende Teil in abdichtende Anlage an den Vorderflächen der Flansche bringbar ist, wobei die Endstücke (40) ein Auseinanderweichen der Flansche während der Streckung des eine variable axiale Länge aufweisenden Teils verhindern.

2. Vorrichtung nach Anspruch 1, dadurch gekennzeichnet, dass das eine variable axiale Länge aufweisende Teil zwei bewegliche Elemente (30) aufweist, welche gleitverschieblich auf dem rohrförmigen Element (28) angeordnet sind, um bei der Streckung des eine variable axiale Länge aufweisenden Teils zwei Rundringdichtungen (36) in abdichtende Anlage an den Flanschen (12) zu belasten.

3. Vorrichtung nach Anspruch 2, dadurch gekennzeichnet, dass jede Rundringdichtung (36) in einem ringförmigen Raum angeordnet ist, welcher zwischen der Aussenfläche des rohrförmigen Elements (28), einer am beweglichen Element (30) geformten Schrägfläche (34) und der Vorderfläche des Flanschs (12) gebildet ist.

4. Vorrichtung nach einem der Ansprüche 2 und/oder 3, dadurch gekennzeichnet, dass jeder Flansch (12) wenigstens ein hervorstehendes Teil (26) aufweist, welches einen Sitz bildet, in welchem die beiden beweglichen Elemente (30) und das rohrförmige Element (28) Aufnahme finden.

5. Vorrichtung nach einem der Ansprüche 2 bis 4, dadurch gekennzeichnet, dass jedes bewegliche Element (30) eine konische Angriffsfläche (32) hat und dass das bewegliche Element (16) ein Mittelstück (36) mit zwei einander gegenüberstehenden konischen Flächen (42) hat, welche an den konischen Angriffsflächen (32) in Anlage kommen, um die beiden beweglichen Elemente (30) auseinanderzudrängen, wenn das bewegliche Element (16) unter Einwirkung einer Spannvorrichtung (50, 70) radial einwärts bewegt wird.

6. Vorrichtung nach Anspruch 5, dadurch gekennzeichnet, dass das bewegliche Element (16) zwei Halbschalen (46) aufweist, welche im Schnitt jeweils das genannte Mittelstück (38) und die genannten Endstücke (40) aufweisen.

7. Vorrichtung nach Anspruch 6, dadurch gekennzeichnet, dass die Spannvorrichtung Schrauben (50) od.dgl. aufweist, welche zwischen den Halbschalen (46) angeordnet sind, um deren gegenseitige Annäherung zu ermöglichen und sie in ihrer Stellung zu halten.

8. Vorrichtung nach Anspruch 6, dadurch gekennzeichnet, dass die Spannvorrichtung ein unabhängiges Werkzeug, z.B. eine Zange oder ein Druckstempel ist, und dass zwischen den Halbschalen (46) Verriegelungseinrichtungen (60, 62) vorgesehen sind, um sie nach Betätigung der Spannvorrichtung in der gegenseitig angenäherten Stellung zu halten.

9. Vorrichtung nach Anspruch 5, dadurch gekennzeichnet, dass das bewegliche Element (16) eine Anzahl von gelenkig miteinander verbundenen Gliedern (68) aufweist, welche eine offene Kette darstellen und im Schnitt jeweils das genannte Mittelstück (38) und die genannten Endstücke (40) aufweisen, und dass die Spannvorrichtung durch eine zwischen den Enden der Kette angeordnete Vorrichtung (70) zum Erzeugen einer Zugspannung gebildet ist.

FIG. 1

FIG. 2

FIG. 3

FIG. 4